# EUROPEAN PATENT APPLICATION

(11) **EP 1 767 407 A1**
(43) Date of publication of application: **28.03.2007**
(21) Application number: 05108928.2
(22) Date of filing: 27.09.2005
(51) Int. Cl.: B60R 21/015

(54) **Seat occupancy sensor assembly**

(71) Applicant: IEE INTERNATIONAL ELECTRONICS & ENGINEERING S.A., 6468 Echternach (LU)
(72) Inventor: Kordel, Markus, 54456 Tawern (DE)
(74) Representative: Beissel, Jean

(57) **Abstract**

An occupancy sensor assembly with a variable-resistance seat occupancy sensor comprises an adapter circuit for connecting the occupancy sensor to a control unit. The adapter circuit includes switching means for switching, between discrete states and as a function of resistance of the seat occupancy sensor, a current drawn from the control unit by the assembly.

## Description

### Technical field

The present invention generally relates to an occupant detection system for an automotive vehicle, in particular to an occupancy sensor assembly associated with a vehicle seat.

### Background Art

Seat occupancy sensors are well known in the automotive industry for different applications e.g. in the context of airbag deployment systems. In order to protect the lives of passengers during a traffic accident, modern vehicles are generally fitted provided with a protection system comprising several airbags and seat belt pretensioners, which are used to absorb the energy of a passenger released during the collision due to the accident. Although the merit of airbags is largely recognized in the interest of passenger safety, there are situations in which the deployment of an airbag is not desired. For instance, in order to reduce the costs for the reparation of the vehicle, the airbag associated with a seat should be disabled when the respective seat is not occupied.

Common seat occupancy sensors include one or more pressure sensors disposed in the vehicle seat. The pressure sensors comprise pressure-sensitive resistors, i.e. the resistance of these pressure sensors changes with the pressure applied on the sensor. The reading of the resistance values of the individual pressure sensors thus gives an indication on the pressure acting on each cell and accordingly can be related to the weight acting on the seat.

In most cases, seat occupancy sensors are connected to a control module that has been developed for the specific application but is not suited for driving the seat occupancy sensor. As a known solution to this problem, occupancy sensors comprise separate control electronics including a communication interface able to communicate with the control module via a communication bus, e.g. K-line, LIN or the like.

The effort of establishing a connection between a seat occupancy sensor and a control module via K-line, LIN or similar is high if compared to the control electronics basic functionality of reading the seat occupancy sensor.

As an alternative solution, modifications of the control module of the application, e.g. the airbag control module, are conceivable. As a drawback, such modifications imply high efforts for development and validation.

### Object of the invention

It is an object of the present invention to provide a seat occupancy assembly, which allows cost-efficient connection to a control unit of an application, e.g. an airbag control unit. This object is achieved by a seat occupancy assembly as claimed in claim 1.

### General Description of the Invention

An occupancy sensor assembly with a variable-resistance seat occupancy sensor comprises an adapter circuit for connecting the occupancy sensor to a control unit. According to an important aspect of the invention, the adapter circuit includes switching means for switching, between discrete states and as a function of resistance of the seat occupancy sensor, a current drawn from the control unit by the assembly. As long as the resistance of the seat occupancy sensor does not cross certain threshold values, the drawn current remains at a substantially constant level. As will be appreciated, such a seat occupancy sensor assembly can be directly connected to the seat belt buckle switch input of an airbag control unit. As a matter of fact, today's airbag control units are often equipped with connection terminals for seat belt buckle switches based on Hall sensors. The control unit derives the status of these seat belt buckle switches (belted or not belted) from the current they draw. The present invention similarly encodes the statuses of the seat belt occupancy sensor in the discrete states of the drawn current. Common seat belt buckle switches based on Hall sensors and the corresponding inputs on the control unit having nearly the same specifications for many car manufacturers and models, no or few modifications are necessary for adapting the present invention to the different cars. As will furthermore be appreciated, the present adapter circuit can be implemented at lower costs if compared with conventional communication interfaces like K-line or LIN.

The switching means preferably comprises first comparator means for comparing the resistance of the seat occupancy sensor with a predetermined first threshold. If the resistance of the occupancy sensor exceeds or falls below this first threshold, the switching means switches the current drawn from the control unit between discrete states; the drawn current thus takes a first value if the resistance of the occupancy sensor is below the first threshold and a second value, which is different from the first value, if the resistance of the occupancy sensor is above the first threshold.

In order to switch the current drawn from the control unit between discrete states, the switching means may comprise a first current source controlled by the first comparator means, the first current source being able to switch between discrete current drawing modes. The comparator means may, for instance, switch the first current source on or off if the resistance of the occupancy sensor runs across the first threshold value.

According to a preferred embodiment of the invention, the adapter circuit includes a first resistor, the resistance of which determines the first threshold, and a second resistor connected in parallel with the occupancy sensor and the first comparator means compares, during operation, the resistance of the seat occupancy sensor with the first threshold by comparing the voltage drop through the parallel connection of the seat occupancy sensor and the second resistor with the voltage drop through the first resistor.

Advantageously, the adapter circuit includes feed circuits for sending substantially constant currents respectively through the first resistor and the parallel connection of the occupancy sensor and the second resistor. Preferably, these feed currents are identical, as in this case the voltage drops are proportional by the same factor to the resistances that are to be compared.

In addition to the first comparator means, the switching means may also comprise second comparator means for comparing the resistance of the seat occupancy sensor with a predetermined second threshold, different from the first one, and accordingly switching the current drawn from the control unit between discrete states if the resistance of the seat occupancy sensor exceeds or falls below the second threshold. To switch the current drawn from the control unit between discrete states, the switching means may then comprise a second current source controlled by the second comparator means, the second current source being able to switch between discrete current drawing modes. It will be appreciated that with two threshold values, the drawn current can take three different states, each state corresponding to a resistance of the seat occupancy sensor either below the lower threshold, between the thresholds, or above the higher threshold. More discrete states of the output current can easily be achieved by providing an adequate number of thresholds.

One may, for instance, combine two or more comparator means in a single component to obtain more sophisticated comparator means for comparing the resistance of the seat occupancy sensor with a plurality of predetermined thresholds. The switching means then switches the current drawn from the control unit between discrete states if the resistance of the seat occupancy sensor exceeds or falls below one of the predetermined thresholds. Such more sophisticated comparator means are well suited for a current source that is able to switch between more than two discrete current drawing modes and thereby switching the current drawn from the control unit between discrete states corresponding to the drawing modes.

According to another preferred embodiment of the invention, the seat occupancy sensor assembly comprises a seat belt buckle switch connected to the switching means in such a way that the switching of the current drawn from the control unit by the assembly between discrete states additionally depends from a seat belt buckle status. The status of the seat belt buckle switch is thus encoded in the state of the drawn current together with the status of the seat occupancy sensor. Assume, for instance, an assembly, wherein the occupant detection electronics is connected in parallel to the seat belt buckle switch electronics. Assuming further that the seat belt buckle switch electronics draws low or no current for status "not buckled" and high current for status "buckled" and that the occupant detection electronics draws low or no current for status "occupied" and high current for status "not occupied", the resulting current drawn by occupant detection electronics and seatbelt buckle switch electronics is a low current, if the statuses are "occupied" and "not buckled". This status combination indicates a critical situation and should result in a seatbelt warning. In case of another status combination the resulting current is higher and no seat belt warning needs to be issued. On the side of the control unit, a single threshold for the drawn current is thus sufficient for discriminating the critical status combination from the other combinations.

The present invention furthermore encompasses a safety system for a vehicle with an airbag control unit and a seat occupancy sensor assembly as described above, wherein the control unit is connected to the assembly and comprises means for measuring the current drawn from the control unit by the assembly. The drawn current can be measured as the current that flows into the seat occupancy sensor assembly or as the current that flows back. Only one electrical connection between the control unit and the assembly is required if the current that flows into the latter is measured; in this case, the electric circuit may be closed via chassis ground.

### Brief Description of the Drawings

Preferred embodiments of the invention will now be described, by way of example, with reference to the accompanying drawings in which:
- Fig. 1:: is a block schematic diagram of a first embodiment of a seat occupancy sensor connected to a control unit;
- Fig. 2:: is a block schematic diagram of a second embodiment of a seat occupancy sensor connected to a control unit;
- Fig. 3:: is an exemplary circuit diagram of an adapter circuit for connecting a seat occupancy sensor to a control unit.

### Description of Preferred Embodiments

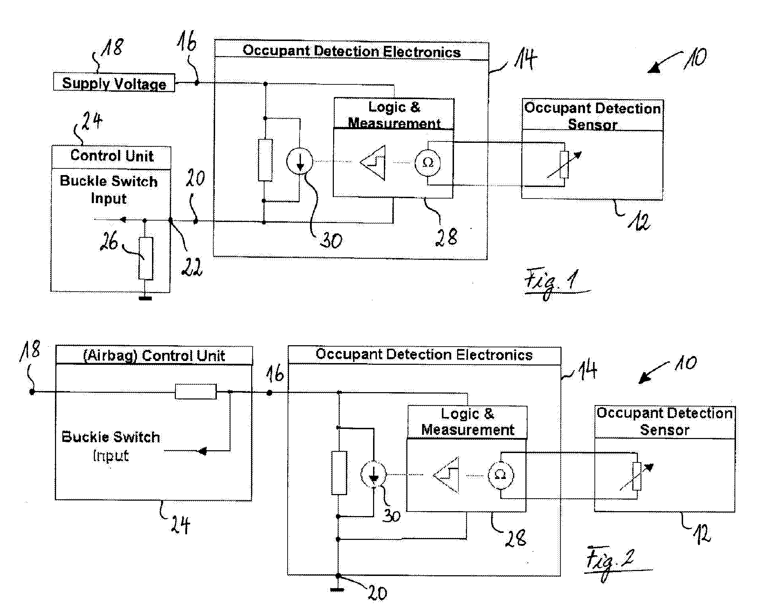

Fig. 1 generally shows a seat occupancy sensor assembly 10 with a variable-resistance seat occupancy sensor 12 and its adapter circuit 14. The assembly 10 has an input terminal 16, by means of which it is connected to the vehicle voltage supply 18, and an output terminal 20, by means of which it is connected to the buckle switch input 22 of a control unit 24. The control unit measures the current drawn by the seat occupancy sensor assembly 10 at the input terminal 16 by measuring the voltage drop through a termination resistor 26.

The seat occupancy sensor 12 is of the pressure-sensitive type: its electrical resistance is highest if the seat is unloaded and continuously decreases as the pressure applied on the seat increases. The adapter circuit 14 comprises a logic circuit 28, which compares the resistance of the seat occupancy sensor with a predetermined threshold. The logic circuit controls a current source 30 in such a way that the latter draws a first amount of current if the resistance of the seat occupancy sensor 12 is below the threshold and a second amount of current if the resistance of the seat occupancy sensor 12 is above the threshold. For instance, the current source 30 may be switched on or off as the resistance crosses the threshold. It should be noted that the logic circuit 28 can also be implemented so that it compares the resistance of the seat occupancy sensor 12 with several thresholds and switches a current source 30 between several current drawing modes. The total current drawn by the assembly 10 finally takes different discrete states that reflect the status of the occupancy sensor 12.

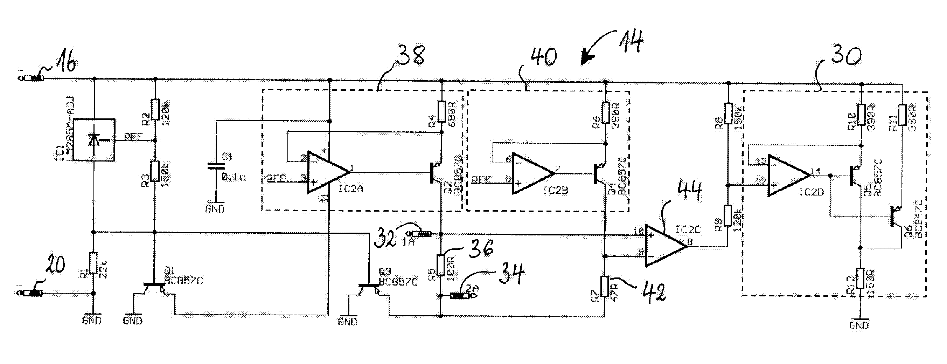

In Fig. 2, the seat occupancy sensor assembly 10 is connected to the control unit 24 only by means of its input terminal 16. The output terminal 20 is connected to ground. The seat sensor assembly 10 operates as in the embodiment illustrated in Fig. 1 but the current drawn by the assembly is measured at the input terminal 16.

An exemplary circuit diagram of an adapter circuit 14 will now be briefly discussed with respect to Fig. 3. The adapter circuit 14 is connectable to supply voltage by the input terminal 16. The output terminal 20 is connected to ground.

The seat occupancy sensor can be connected between the measurement terminals 32, 34, in parallel to resistor 36. Comparison of occupancy sensor resistance with a threshold is achieved as follows: Current source 38 sends a substantially constant current through the parallel connection of seat occupancy sensor and resistor 36. Similarly, current source 40 sends a substantially constant current through a reference resistor 42. A comparator 44 compares the voltage drop through the parallel connection of occupancy sensor and resistor 36 with the voltage drop though the reference resistor 42.

The output of the comparator 44 is connected to current source 30 Depending on whether the sensor resistance exceeds the threshold or not, the current source 30 draws a low or a high current. Consequently, the total current drawn by the assembly takes discrete values according to the state of the current source 30.

## Claims

1. A seat occupancy sensor assembly comprising a variable-resistance seat occupancy sensor and an adapter circuit for connecting said occupancy sensor to a control unit, **characterized in that** said adapter circuit includes switching means for switching, between discrete states and as a function of resistance of said seat occupancy sensor, a current drawn from said control unit by said assembly.

2. An assembly according to claim 1, wherein said switching means comprises first comparator means for comparing the resistance of said seat occupancy sensor with a predetermined first threshold, and wherein said switching means switches said current drawn from said control unit between discrete states if said resistance of said occupancy sensor exceeds or falls below said first threshold.

3. An assembly according to claim 2, wherein said switching means comprises a first current source controlled by said first comparator means, said first current source being able to switch between discrete current drawing modes and thereby switching said current drawn from said control unit between discrete states.

4. An assembly according to claim 2 or 3, wherein said adapter circuit includes a first resistor, whose resistance determines said first threshold, a second resistor connected in parallel with said occupancy sensor and wherein said first comparator means compares, during operation, the resistance of said seat occupancy sensor with said first threshold by comparing the voltage drop through said parallel connection of said seat occupancy sensor and said second resistor with the voltage drop through said first resistor.

5. An assembly according to claim 4, wherein said adapter circuit includes feed circuits for sending substantially constant currents respectively through said first resistor and said parallel connection of said occupancy sensor and said second resistor.

6. An assembly according to any one of claims 2 to 5, wherein said switching means comprises a second comparator means for comparing the resistance of said seat occupancy sensor with a predetermined second threshold, and wherein said switching means switches said current drawn from said control unit between discrete states if said resistance of said seat occupancy sensor exceeds or falls below said second threshold.

7. An assembly according to claim 6, wherein said switching means comprises a second current source controlled by said second comparator means, said second current source being able to switch between discrete current drawing modes and thereby switching said current drawn from said control unit between discrete states.

8. An assembly according to claim 1, wherein said switching means comprises a comparator means for comparing the resistance of said seat occupancy sensor with a plurality of predetermined thresholds, and wherein said switching means switches said current drawn from said control unit between discrete states if the resistance of said seat occupancy sensor exceeds or falls below one of said predetermined thresholds.

9. An assembly according to claim 8, wherein said switching means comprises a current source controlled by said comparator means, said current source being able to switch between more than two discrete current drawing modes and thereby switching said current drawn from said control unit between discrete states corresponding to said drawing modes.

10. An assembly according to any one of the preceding claims, comprising a seat belt buckle switch connected to said switching means in such a way that the switching of said current drawn from said control unit by said assembly between discrete states additionally depends from a seat belt buckle status.

11. A safety system for a vehicle comprising an airbag control unit and a seat occupancy sensor assembly according to any one of the preceding claims, wherein said control unit is connected to said assembly and comprises means for measuring the current drawn from said control unit by said assembly.
